# DEMANDE DE BREVET EUROPEEN

(11) **EP 4 755 268 A2**
(43) Date de publication de la demande: **10.06.2026**
(21) Numéro de dépôt: 26166233.2
(22) Date de dépôt: 26.05.2023
(51) Int. Cl.: A47J 27/00

(54) **SUPPORT DE CUISSON METALLIQUE REVETU POUVANT ETRE CHAUFFE PAR INDUCTION**

(30) Priorité: 30.05.2022 FR 2205156
(62) Demande divisionnaire de: 23729718.9
(71) Demandeur: SEB S.A., 69130 Ecully (FR)
(72) Inventeur: ALLEMAND, Simon, 69134 ECULLY CEDEX (FR); CUILLERY, Pascal, 69134 ECULLY CEDEX (FR)
(74) Mandataire: SEB Développement

(57) **Abrégé**

- L'invention concerne un support de cuisson métallique revêtu (10) compatible avec un chauffage par induction, présentant une face de cuisson (11) et une face de chauffe (12) présentant un fond (13) configuré pour reposer sur un dispositif de chauffage par induction, le support de cuisson métallique revêtu (10) comportant un substrat métallique (2) portant un revêtement antiadhésif (1) formant une surface de cuisson (14), et un revêtement de protection (5) formant une surface de chauffe (15).
- Selon l'invention, au moins dans une partie du fond (13) une couche riche en ferrite (3) est agencée entre le substrat métallique (2) et le revêtement de protection (5), la couche riche en ferrite (3) présentant une température de Curie, et une couche fine électriquement conductrice (4) est agencée entre la couche riche en ferrite (3) et le revêtement de protection (5).
- L'invention concerne également un article culinaire et un appareil électrique de cuisson comportant un tel support de cuisson métallique revêtu (10).

## Description

La présente invention concerne le domaine technique des supports de cuisson métalliques compatibles avec un chauffage par induction, pour cuire ou réchauffer des aliments. De tels supports de cuisson métalliques peuvent être utilisés avec un dispositif de chauffage par induction tels qu'une plaque à induction posée ou intégrée à un plan de travail, ou qu'un foyer de chauffe par induction intégré à un appareil électrique de cuisson.

La présente invention concerne plus particulièrement les supports de cuisson métalliques revêtus compatibles avec un chauffage par induction.

La présente invention concerne notamment, mais non exclusivement, les supports de cuisson métalliques revêtus formant un récipient de cuisson.

La présente invention concerne également les articles culinaires comprenant un support de cuisson métallique revêtu associé à au moins un organe de préhension. Si désiré le ou les organes de préhension peuvent être amovibles ou démontables par rapport au support de cuisson métallique revêtu.

La présente invention concerne également les appareils électriques de cuisson comportant un support de cuisson métallique revêtu associé à un dispositif de chauffage par induction.

Il est connu du document JP H10 125453 de réaliser, selon l'exemple de réalisation de la figure 3, un article culinaire multicouches comportant une calotte en alliage d'aluminium, une couche à point de Curie agencée sur la partie externe du fond de la calotte, ainsi qu'une couche conductrice de protection sur la face extérieure de chauffe, avec un revêtement fluoré prévu sur la face interne de cuisson. Une telle réalisation permet de réaliser un article culinaire pouvant être chauffé par induction.

Toutefois cette couche à point de Curie est une couche d'acier inoxydable déposée par dépôt à arc (Arc Spray). Une telle réalisation apparait relativement onéreuse.

Différents aspects de la présente invention visent à remédier aux inconvénients de l'art antérieur en proposant un support de cuisson métallique revêtu compatible avec un chauffage par induction, dont le prix de revient est limité.

Un premier aspect de la présente invention concerne un support de cuisson métallique revêtu compatible avec un chauffage par induction, qui présente une face de cuisson et une face de chauffe présentant un fond configuré pour reposer sur un dispositif de chauffage par induction, le support de cuisson métallique revêtu comportant un substrat métallique portant un revêtement de protection formant une surface de chauffe de la face de chauffe, le substrat métallique portant un revêtement antiadhésif formant une surface de cuisson de la face de cuisson, ou formant une surface de cuisson de la face de cuisson, du fait qu'au moins dans une partie du fond une couche riche en ferrite est agencée entre le substrat métallique et le revêtement de protection, la couche riche en ferrite présentant une température de Curie, une forte perméabilité magnétique jusqu'à la température de Curie, ainsi qu'une très forte résistivité électrique, et qu'une couche fine électriquement conductrice est agencée entre la couche riche en ferrite et le revêtement de protection. La couche riche en ferrite, par sa forte perméabilité magnétique jusqu'à la température de Curie, permet de canaliser le champ magnétique et d'éviter les fuites magnétiques vers le substrat métallique qui limiterait la compatibilité induction du support de cuisson métallique revêtu. Le champ magnétique se concentre ainsi dans la couche fine électriquement conductrice. Celle-ci étant conductrice et de faible épaisseur, la création de courant de Foucault permet son échauffement par effet Joule. Ainsi la couche riche en ferrite permet de conférer au support de cuisson métallique revêtu une compatibilité avec un dispositif de chauffage par induction.

La couche fine électriquement conductrice peut recouvrir la couche riche en ferrite, sans nécessairement recouvrir les bords de la couche riche en ferrite.

La couche riche en ferrite peut s'étendre sur l'ensemble du fond, permettant d'éviter toutes fuites magnétiques, notamment sur des dispositifs de chauffe par induction de diamètre inférieur à celui du support de cuisson métallique revêtu. Cette disposition permet d'améliorer le fonctionnement sur différentes tailles de dispositifs de chauffe par induction.

La couche fine électriquement conductrice peut s'étendre sur l'ensemble du fond. Cette disposition permet un échauffement sur l'ensemble du fond du dispositif de cuisson, l'échauffement étant généré dans la couche fine électriquement conductrice.

Le substrat métallique peut présenter une épaisseur comprise entre 2 mm et 6 mm lorsque portant le revêtement antiadhésif ou comprise entre 0,4 et 3 mm lorsque dépourvu de revêtement antiadhésif.

La couche riche en ferrite peut présenter une perméabilité magnétique relative comprise entre 10 et 1000, de préférence comprise entre 100 et 1000.

La couche riche en ferrite peut présenter une résistivité électrique comprise entre 0,1 et 1000 Ohm.m, de préférence comprise entre 1 et 100 Ohm.m.

La couche riche en ferrite peut présenter une température de Curie comprise entre 180°C et 250°.

La couche riche en ferrite peut être formée par des charges de ferrite disposées dans une matrice organique ou inorganique. Les charges de ferrite pourraient également être déposées par projection thermique.

La couche fine électriquement conductrice peut présenter une épaisseur comprise en 5 et 100 µm, de préférence comprise entre 5 et 25 µm.

La couche fine électriquement conductrice peut présenter une résistivité électrique comprise entre 1 et 100 µOhm.cm, de préférence comprise entre 1 et 10 µOhm.cm.

La couche fine électriquement conductrice peut être réalisée notamment en alliage d'aluminium, ou en alliage de cuivre, ou en alliage d'argent.

Le revêtement de protection peut notamment être un revêtement de type PTFE, ou un revêtement de type émail, ou un revêtement de type laque, ou un revêtement de type céramique, ou un revêtement de type sol-gel, ou un revêtement à base de résine silicone, ou un revêtement à base de résine silicone-polyester. Le revêtement de protection peut être monocouche ou multicouches. Si désiré, d'autres revêtements de protection peuvent être envisagés.

Le revêtement antiadhésif peut être un revêtement de type PTFE, ou un revêtement de type céramique, ou un revêtement de type sol-gel, ou un revêtement à base de résine silicone, ou un revêtement à base de résine silicone-polyester. Le revêtement antiadhésif peut être monocouche ou multicouches. Si désiré, d'autres revêtements antiadhésifs compatibles avec le contact alimentaire peuvent être envisagés.

Une paroi latérale peut s'élever autour du fond de la face de chauffe pour former un récipient de cuisson.

La couche riche en ferrite et la couche fine électriquement conductrice peuvent s'étendre sur l'ensemble de la paroi latérale, permettant d'éviter toutes fuites magnétiques, notamment sur des dispositifs de chauffe par induction de diamètre supérieur à celui du support de cuisson.

Au moins une partie de la paroi latérale peut être dépourvue de couche riche en ferrite et de couche fine électriquement conductrice, notamment une partie supérieure de la paroi latérale.

Ainsi la couche riche en ferrite et la couche fine électriquement conductrice peuvent s'étendre sur au moins une partie inférieure de la paroi latérale.

L'ensemble de la paroi latérale peut être dépourvu de couche riche en ferrite et de couche fine électriquement conductrice. Cette disposition permet de faciliter le dépôt de la couche riche en ferrite et de la couche fine électriquement conductrice.

Un deuxième aspect de la présente invention concerne un article culinaire comportant un support de cuisson métallique revêtu et un organe de préhension monté sur le support de cuisson métallique revêtu, dans lequel le support de cuisson métallique revêtu est conforme à l'une au moins des caractéristiques précitées.

Un troisième aspect de la présente invention concerne un appareil électrique de cuisson comportant un support de cuisson métallique revêtu associé à un foyer de chauffe par induction, dans lequel le support de cuisson métallique revêtu est conforme à l'une au moins des caractéristiques précitées.

D'autres caractéristiques et attributs de la présente invention apparaîtront plus clairement à la lecture de la description détaillée qui suit d'exemples de réalisation et de variantes, pris à titre nullement limitatif, illustrés dans les figures annexées, dans lesquelles :
La figure 1 représente une vue schématique en élévation et en coupe transversale d'un premier exemple de réalisation d'un support de cuisson métallique revêtu selon l'invention,
La figure 2 représente une vue schématique en élévation et en coupe transversale d'un deuxième exemple de réalisation d'un support de cuisson métallique revêtu selon l'invention,
La figure 3 représente une vue schématique en élévation et en coupe transversale d'un troisième exemple de réalisation d'un support de cuisson métallique revêtu selon l'invention,
La figure 4 représente une vue schématique en élévation et en coupe transversale d'un quatrième exemple de réalisation d'un support de cuisson métallique revêtu selon l'invention,
La figure 5 représente une vue schématique en élévation et en coupe transversale d'un cinquième exemple de réalisation d'un support de cuisson métallique revêtu selon l'invention,
La figure 6 représente une vue schématique en élévation et en coupe transversale d'un exemple de réalisation d'un article culinaire comportant un support de cuisson métallique revêtu selon l'invention,
La figure 7 représente une vue schématique en élévation et en coupe transversale d'un exemple de réalisation d'un appareil électrique de cuisson comportant un support de cuisson métallique revêtu selon l'invention.

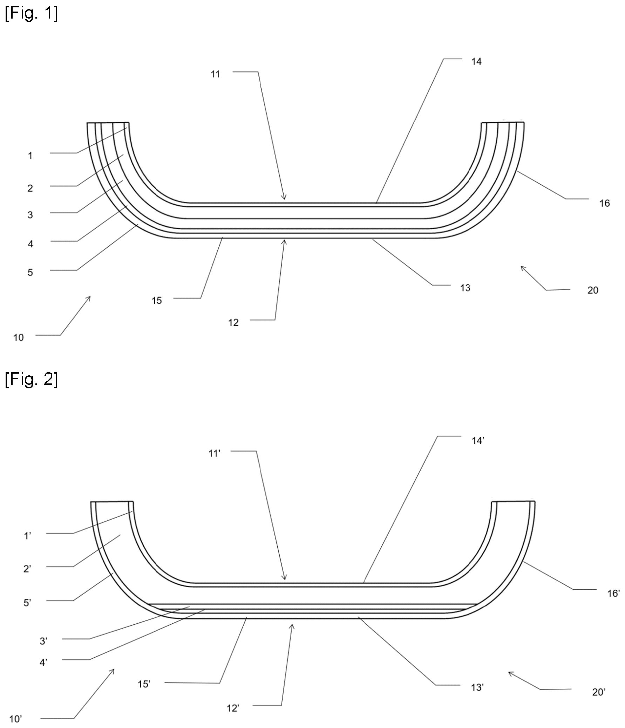

Les figures 1 et 2 illustrent deux exemples de réalisation d'un support de cuisson métallique revêtu 10 ; 10' compatible avec un chauffage par induction. Le support de cuisson métallique revêtu 10 ; 10' compatible avec un chauffage par induction présente une face de cuisson 11 ; 11' et une face de chauffe 12 ; 12'. La face de chauffe 12 ; 12' présente un fond 13 ; 13' configuré pour reposer sur un dispositif de chauffage par induction.

Le support de cuisson métallique revêtu 10 ; 10' comporte un substrat métallique 2 ; 2' portant un revêtement antiadhésif 1 ; 1' formant une surface de cuisson 14 ; 14' de la face de cuisson 11 ; 11'. Le revêtement antiadhésif 1 ; 1' est par exemple un revêtement de type PTFE (en d'autres termes, un revêtement à base de résine fluorée de type PTFE), ou un revêtement de type céramique, ou un revêtement de type sol-gel (en d'autres termes, un revêtement synthétisé par voie sol-gel). Le revêtement antiadhésif 1 ; 1" peut être monocouche ou multicouches.

Le substrat métallique 2 ; 2' est avantageusement réalisé en aluminium.

De manière préférée, le substrat métallique 2 ; 2' présente une épaisseur comprise entre 2 mm et 6 mm.

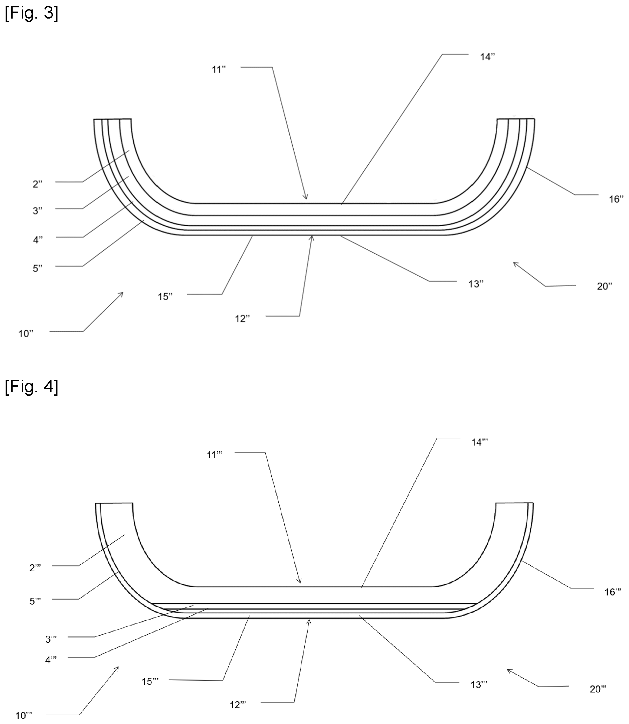

Les figures 3, 4 et 5 illustrent trois autres exemples de réalisation d'un support de cuisson métallique revêtu 10" ; 10"' ; 10"" compatible avec un chauffage par induction. Le support de cuisson métallique revêtu 10" ; 10‴ ; 10ʺʺ compatible avec un chauffage par induction présente une face de cuisson 11" ; 11‴ ; 11"" et une face de chauffe 12" ; 12"' ; 12"". La face de chauffe 12" ; 12"' ; 12"" présente un fond 13" ; 13'" ; 13"" configuré pour reposer sur un dispositif de chauffage par induction.

Le support de cuisson métallique revêtu 10" ; 10‴ ; 10"" se différencie du support métallique revêtu 10 ; 10' en ce qu'il comporte un substrat métallique 2" ; 2"' ; 2"" formant une surface de cuisson 14" ; 14'" ; 14"" de la face de cuisson 11" ; 11‴ ; 11"". Ainsi le substrat métallique 2" ; 2‴ ; 2"" est dépourvu de revêtement antiadhésif. Le substrat métallique 2" ; 2‴ ; 2"" comporte avantageusement une couche d'acier inoxydable formant la surface de cuisson 14" ; 14"' ; 14"" réalisée en acier inoxydable. Le substrat métallique 2", 2‴ est avantageusement réalisé en matériau multicouches comportant une couche d'acier inoxydable formant la surface de cuisson 14" ; 14"', notamment en matériau bi-couches acier inoxydable/aluminium. Le substrat métallique 2", 2‴ peut notamment comporter une couche d'aluminium. A titre de variante, le substrat métallique 2", 2"' peut être formé par une couche d'acier inoxydable. De manière préférée, le substrat métallique 2" ; 2"' présente une épaisseur comprise entre 0,4 mm et 3 mm. Le substrat métallique 2"" est avantageusement formé par une couche d'acier inoxydable formant la surface de cuisson 14"", sous laquelle est assemblée une couche de diffusion thermique 17 s'étendant uniquement dans la zone du fond 13"", la couche de diffusion thermique 17 étant avantageusement réalisée en aluminium. A titre de variante, le substrat métallique 2"" peut être réalisé en matériau multicouches comportant une couche d'acier inoxydable formant la surface de cuisson 14"", notamment en matériau tri-couches acier inoxydable/aluminium/acier inoxydable. De manière préférée, le substrat métallique 2"" présente une épaisseur comprise entre 0,4 mm et 3 mm. De manière préférée, la couche de diffusion thermique 17 présente une épaisseur comprise entre 2 mm et 10 mm.

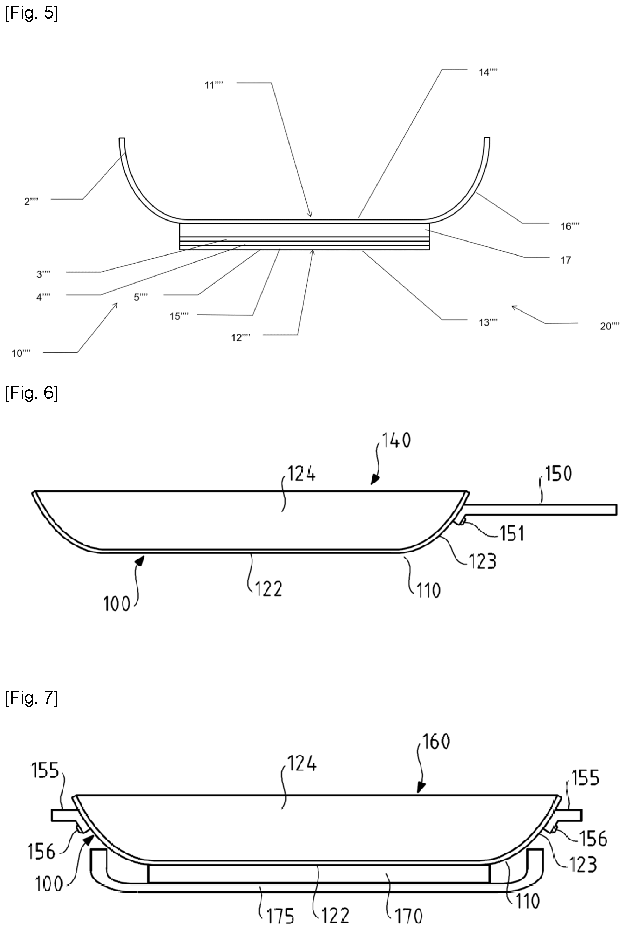

Une couche riche en ferrite 3 ; 3' ; 3" ; 3‴ ; 3"" est agencée entre le substrat métallique 2 ; 2' ; 2" ; 2‴ ; 2ʺʺ et un revêtement de protection 5 ; 5' ; 5" ; 5‴ ; 5"". Dans les exemples de réalisation illustrés sur les figures 1, 2, 3 et 4, la couche riche en ferrite 3 ; 3' ; 3" ; 3‴ est disposée sur le substrat métallique 2 ; 2' ; 2" ; 2"'. Dans l'exemple de réalisation illustré sur la figure 5, la couche riche en ferrite 3"" est disposée sur la couche de diffusion thermique 17. La couche riche en ferrite 3 ; 3' ; 3" ; 3‴ ; 3"" présente une température de Curie, une forte perméabilité magnétique jusqu'à la température de Curie, ainsi qu'une très forte résistivité électrique. De préférence, la couche riche en ferrite 3 ; 3' ; 3" ; 3‴ ; 3"" présente une température de Curie comprise entre 180°C et 250°. La couche riche en ferrite 3 ; 3' ; 3" ; 3‴ ; 3"" présente une perméabilité magnétique relative comprise entre 10 et 1000, de préférence comprise entre 100 et 1000. La couche riche en ferrite 3 ; 3' ; 3" ; 3‴ ; 3"" présente une résistivité électrique comprise entre 0,1 et 1000 Ohm.m, de préférence comprise entre 1 et 100 Ohm.m. La couche riche en ferrite 3 ; 3' ; 3" ; 3"' ; 3"" peut notamment être formée par des charges de ferrite disposées dans une matrice organique ou inorganique.

Dans les exemples de réalisation représentés sur les figures 1 et 2 ainsi que dans les exemples de réalisation représentés sur les figures 3, 4 et 5, la couche riche en ferrite 3 ; 3' ; 3" ; 3‴ ; 3"" s'étend sur l'ensemble du fond 13 ; 13' ; 13" ; 13"' ; 13"". A titre de variante, la couche riche en ferrite 3 ; 3' ; 3" ; 3‴ ; 3"" pourrait être agencée entre le substrat métallique 2 ; 2' ; 2" ; 2‴ ; 2"" et le revêtement de protection 5 ; 5' ; 5" ; 5"' ; 5"" au moins dans une partie du fond 13 ; 13' ; 13" ; 13‴ ; 13"".

Une couche fine électriquement conductrice 4 ; 4' ; 4" ; 4‴ ; 4"" est agencée entre la couche riche en ferrite 3 ; 3' ; 3" ; 3‴ ; 3"" et le revêtement de protection 5 ; 5' ; 5" ; 5‴ ; 5"". La couche fine électriquement conductrice 4 ; 4'; 4" ; 4‴ ; 4"" présente une épaisseur comprise en 5 et 100 µm, de préférence comprise entre 5 et 25 µm. La couche fine électriquement conductrice 4 ; 4' ; 4" ; 4‴ ; 4"" présente une perméabilité magnétique relative de 1. La couche fine électriquement conductrice 4 ; 4' ; 4" ; 4‴ ; 4ʺʺ présente une résistivité électrique comprise entre 1 et 100 µOhm.cm, de préférence comprise entre 1 et 10 µOhm.cm. La couche fine électriquement conductrice 4 ; 4' ; 4" ; 4‴ ; 4ʺʺ peut notamment être réalisée en alliage d'aluminium, ou en alliage de cuivre ou en alliage d'argent.

Le substrat métallique 2 ; 2' ; 2" ; 2‴ ; 2"" porte le revêtement de protection 5 ; 5' ; 5" ; 5‴ ; 5"" formant une surface de chauffe 15 ; 15' ; 15" ; 15'" ; 15"" de la face de chauffe 12 ; 12' ; 12" ; 12"' ; 12"". Le revêtement de protection 5 ; 5'; 5" ; 5"' ; 5"" est par exemple un revêtement de type PTFE (PolyTétraFluoroEthylène ; en d'autres termes, un revêtement à base de résine fluorée de type PTFE), ou un revêtement de type émail, ou un revêtement de type laque, ou un revêtement de type céramique, ou un revêtement de type sol-gel (en d'autres termes, un revêtement synthétisé par voie sol-gel). Le revêtement de protection 5 ; 5' ; 5" ; 5‴ ; 5"" peut être monocouche ou multicouches.

Le revêtement de protection 5 ; 5' ; 5" ; 5‴ ; 5ʺʺ et/ou le revêtement antiadhésif 1 ; 1' peu(ven)t aussi être un/des revêtement(s) à base de résine silicone ou de résine silicone-polyester. Les résines silicones-polyesters sont très répandues dans la moulerie car elles sont antiadhésives tout en étant adhérentes au substrat et compatibles avec des procédés d'emboutissage. Néanmoins, elles se dégradent à des températures supérieures à 230°C. L'utilisation de la couche riche en ferrite 3 ; 3' ; 3" ; 3‴ ; 3"" permet de limiter la température du support de cuisson métallique revêtu 10 ; 10' ; 10" ; 10'" ; 10ʺʺ lorsque celui-ci est chauffé par induction, et d'envisager l'utilisation de résines silicones-polyesters pour le revêtement de protection 5 ; 5' ; 5" ; 5"' ; 5"" et/ou le revêtement antiadhésif 1 ; 1'.

Dans les exemples de réalisation représentés sur les figures 1 et 2, ainsi que dans les exemples de réalisation représentés sur les figures 3, 4 et 5, la couche fine électriquement conductrice 4 ; 4' ; 4" ; 4‴ ; 4ʺʺ s'étend sur l'ensemble du fond 13 ; 13' ; 13" ; 13"' ; 13"".

A titre de variante, la couche fine électriquement conductrice 4 ; 4' ; 4" ; 4‴ ; 4ʺʺ pourrait s'étendre au moins dans la ou les parties du fond 13 ; 13' ; 13" ; 13"' ; 13ʺʺ présentant la couche riche en ferrite 3 ; 3' ; 3" ; 3‴ ; 3"". Ainsi en d'autres termes, la couche fine électriquement conductrice 4 ; 4' ; 4" ; 4‴ ; 4"" recouvre la couche riche en ferrite 3 ; 3' ; 3" ; 3‴ ; 3"".

Dans l'exemple de réalisation illustré sur la figure 2, ainsi que dans les exemples de réalisation illustrés sur les figures 4 et 5, la couche riche en ferrite 3' ; 3"' ; 3"" s'étend uniquement sur le fond 13' ; 13'" ; 13"", et la couche fine électriquement conductrice 4' ; 4‴ ; 4"" s'étend uniquement sur le fond 13' ; 13"' ; 13ʺʺ. La couche fine électriquement conductrice 4' ; 4‴ ; 4"" recouvre la couche riche en ferrite 3' ; 3‴, 3"" sans nécessairement recouvrir les bords de la couche riche en ferrite 3' ; 3‴ ; 3"', tel que représenté notamment sur la figure 5 dans laquelle la couche riche en ferrite 3"" est disposée sous la couche de diffusion thermique 17. Il est à noter que sur les figures 1 et 2 ainsi que sur les figures 3, 4 et 5 les épaisseurs de la couche fine électriquement conductrice 4 ; 4' ; 4" ; 4‴ ; 4"" et de la couche riche en ferrite 3 ; 3' ; 3" ; 3‴ ; 3"" ne sont pas nécessairement représentées à l'échelle par rapport au substrat métallique 2 ; 2' ; 2" ; 2‴ ; 2"", et/ou par rapport au revêtement antiadhésif 1 ; 1', et/ou par rapport au revêtement de protection 5 ; 5' ; 5" ; 5‴ ; 5"", ou même par rapport à la couche de diffusion thermique 17.

Dans les exemples de réalisation représentés sur les figures 1 et 2, ainsi que dans les exemples de réalisation représentés sur les figures 3, 4 et 5, une paroi latérale 16 ; 16' ; 16" ; 16'" ; 16"" s'élève autour du fond 13 ; 13' ; 13" ; 13"' ; 13"" de la face de chauffe 12 ; 12' ; 12" ; 12"' ; 12"" pour former un récipient de cuisson 20 ; 20' ; 20" ; 20‴ ; 20"". A titre de variante, le support de cuisson métallique revêtu 10 ; 10' ; 10" ; 10"' ; 10"" ne comporte pas nécessairement une paroi latérale s'élevant autour du fond 13 ; 13' ; 13" ; 13'" ; 13"".

Dans l'exemple de réalisation représenté sur la figure 1 ainsi que dans l'exemple de réalisation illustré sur la figure 3, la couche riche en ferrite 3 ; 3" et la couche fine électriquement conductrice 4 ; 4" s'étendent sur l'ensemble de la paroi latérale 16 ; 16".

Dans l'exemple de réalisation représenté sur la figure 2 ainsi que dans les exemples de réalisation illustrés sur les figures 4 et 5, l'ensemble de la paroi latérale 16' ; 16'" ; 16"" est dépourvu de couche riche en ferrite et de couche fine électriquement conductrice.

A titre de variante, au moins une partie de la paroi latérale pourrait être dépourvue de couche riche en ferrite et de couche fine électriquement conductrice, De préférence alors, la couche fine électriquement conductrice recouvre la couche riche en ferrite, sans nécessairement recouvrir les bords de la couche riche en ferrite.

Les figures 6 et 7 illustrent un support de cuisson métallique revêtu 100 présentant une face de chauffe 110. Le support de cuisson métallique revêtu 100 comporte une paroi latérale 123 s'élevant autour d'un fond 122 de la face de chauffe 110 pour former un récipient de cuisson 124. A titre de variante, le support de cuisson métallique revêtu 100 ne forme pas nécessairement un récipient de cuisson 124. Le support de cuisson métallique revêtu 100 peut notamment former une plaque de cuisson.

La figure 6 illustre un article culinaire 140 comportant un support de cuisson métallique revêtu 100 formant un récipient de cuisson 124. Le support de cuisson métallique revêtu 100 peut notamment être formé par le support de cuisson métallique revêtu 10 illustré sur la figure 1 ou par le support de cuisson métallique revêtu 10' illustré sur la figure 2, ou par l'un des supports de cuisson 10" ; 10"' ; 10ʺʺ illustrés sur les figures 3, 4 et 5. Un organe de préhension 150 est monté sur le récipient de cuisson 124. Dans l'exemple de réalisation illustré sur la figure 6, l'organe de préhension 150 est fixé au récipient de cuisson 124 par au moins un rivet 151. A cet effet le rivet 151 est monté dans un trou ménagé dans une paroi latérale 123 du récipient de cuisson. Si désiré plusieurs rivets 151 peuvent être utilisés pour fixer l'organe de préhension 150 sur le récipient de cuisson 124. De préférence entre deux et quatre rivets 151 sont utilisés pour fixer l'organe de préhension 150 sur le récipient de cuisson 124. En alternative l'organe de préhension 150 pourrait être fixé sur la paroi latérale 123 par soudage ou par vissage sur un goujon soudé sur la paroi latérale 123. Si désiré un autre organe de préhension peut être fixé sur la paroi latérale 123 du récipient de cuisson 124 au moyen d'au moins un autre rivet, par soudage ou par vissage sur un goujon soudé sur la paroi latérale 123.

La figure 7 illustre un appareil électrique de cuisson 160 comportant un support de cuisson métallique revêtu 100 associé à un foyer de chauffe par induction 170. Le support de cuisson métallique revêtu 100 forme un récipient de cuisson 124. Le support de cuisson métallique revêtu 100 peut notamment être formé par le support de cuisson métallique revêtu 10 illustré sur la figure 1 ou par le support de cuisson métallique revêtu 10' illustré sur la figure 2, ou par l'un des supports de cuisson métalliques revêtus 10" ; 10‴ ; 10ʺʺ illustrés sur les figures 3, 4 et 5. Le récipient de cuisson 124 est agencé dans une base chauffante 175 comportant le foyer de chauffe par induction 170. Le fond 122 repose sur le foyer de chauffe par induction 170. Si désiré le récipient de cuisson 124 peut comporter au moins un organe de préhension 155. Dans l'exemple de réalisation illustré sur la figure 4 le récipient de cuisson 124 comporte deux organes de préhension 155 opposés. Le ou chaque organe de préhension 155 est fixé au récipient de cuisson 124 par au moins un rivet 156. A cet effet le rivet 156 est monté dans un trou ménagé dans la paroi latérale 123. Si désiré plusieurs rivets 156 peuvent être utilisés pour fixer le ou chaque organe de préhension 155 sur le récipient de cuisson 124. De préférence entre deux et quatre rivets 156 sont utilisés pour fixer le ou chaque organe de préhension 155 sur le récipient de cuisson 124. En alternative le ou au moins un des organes de préhension 155 pourrait être fixé sur la paroi latérale 123 par soudage ou par vissage sur un goujon soudé sur la paroi latérale 123.

Diverses modifications et/ou améliorations évidentes pour l'homme du métier peuvent être apportées aux exemples de réalisation de l'invention décrits dans la présente description sans sortir du cadre de l'invention défini par les revendications annexées.

## Revendications

1. Support de cuisson métallique revêtu (10 ; 10") compatible avec un chauffage par induction, présentant une face de cuisson (11 ; 11") et une face de chauffe (12 ; 12") présentant un fond (13 ; 13") configuré pour reposer sur un dispositif de chauffage par induction, le support de cuisson métallique revêtu (10 ; 10") comportant un substrat métallique (2 ; 2") portant un revêtement de protection (5 ; 5") formant une surface de chauffe (15 ; 15") de la face de chauffe (12 ; 12' ; 12" ; 12'" ; 12""), le substrat métallique (2) portant un revêtement antiadhésif (1) formant une surface de cuisson (14) de la face de cuisson (11), ou le substrat métallique (2") formant une surface de cuisson (14") de la face de cuisson (11"), au moins dans une partie du fond (13 ; 13") une couche riche en ferrite (3 ; 3") étant agencée entre le substrat métallique (2 ; 2") et le revêtement de protection (5 ; 5"), la couche riche en ferrite (3 ; 3") présentant une température de Curie, une forte perméabilité magnétique jusqu'à la température de Curie, ainsi qu'une très forte résistivité électrique, une couche fine électriquement conductrice (4 ; 4") étant agencée entre la couche riche en ferrite (3 ; 3") et le revêtement de protection (5 ; 5"), **caractérisé en ce qu'**une paroi latérale (16 ; 16") s'élève autour du fond (13 ; 13") de la face de chauffe (12 ; 12") pour former un récipient de cuisson (20 ; 20"), et **en ce que** la couche riche en ferrite (3 ; 3") et la couche fine électriquement conductrice (4 ; 4") s'étendent sur au moins une partie inférieure de la paroi latérale (16 ; 16"), la couche riche en ferrite (3 ; 3") et la couche fine électriquement conductrice (4 ; 4") s'étendant si désiré sur l'ensemble de la paroi latérale (16 ; 16").

2. Support de cuisson métallique revêtu (10 ; 10") selon la revendication 1, **caractérisé en ce que** la couche fine électriquement conductrice (4 ; 4") recouvre la couche riche en ferrite (3 ; 3").

3. Support de cuisson métallique revêtu (10 ; 10") selon l'une des revendications 1 ou 2, **caractérisé en ce que** la couche riche en ferrite (3 ; 3") s'étend sur l'ensemble du fond (13 ; 13").

4. Support de cuisson métallique revêtu (10 ; 10") selon l'une des revendications 1 ou 3, **caractérisé en ce que** la couche fine électriquement conductrice (4 ; 4") s'étend sur l'ensemble du fond (13 ; 13").

5. Support de cuisson métallique revêtu (10 ; 10") selon l'une des revendications 1 à 4, **caractérisé en ce que** le substrat métallique (2 ; 2") présente une épaisseur comprise entre 2 mm et 6 mm lorsque portant le revêtement antiadhésif (1) ou comprise entre 0,4 et 3 mm lorsque dépourvu de revêtement antiadhésif.

6. Support de cuisson métallique revêtu (10 ; 10") selon l'une des revendications 1 à 5, **caractérisé en ce que** la couche riche en ferrite (3 ; 3") présente une perméabilité magnétique relative comprise entre 10 et 1000, de préférence comprise entre 100 et 1000.

7. Support de cuisson métallique revêtu (10 ; 10") selon l'une des revendications 1 à 6, **caractérisé en ce que** la couche riche en ferrite (3 ; 3") présente une résistivité électrique comprise entre 0,1 et 1000 Ohm.m, de préférence comprise entre 1 et 100 Ohm.m.

8. Support de cuisson métallique revêtu (10 ; 10") selon l'une des revendications 1 à 7, **caractérisé en ce que** la couche riche en ferrite (3 ; 3") présente une température de Curie comprise entre 180°C et 250°.

9. Support de cuisson métallique revêtu (10 ; 10") selon l'une des revendications 1 à 8, **caractérisé en ce que** la couche fine électriquement conductrice (4 ; 4") présente une épaisseur comprise entre 5 et 100 µm, de préférence comprise entre 5 et 25 µm.

10. Support de cuisson métallique revêtu (10 ; 10") selon l'une des revendications 1 à 9, **caractérisé en ce que** la couche fine électriquement conductrice (4 ; 4") présente une résistivité électrique comprise entre 1 et 100 µOhm.cm, de préférence comprise entre 1 et 10 µOhm.cm.

11. Support de cuisson métallique revêtu (10 ; 10") selon l'une des revendications 1 à 10, **caractérisé en ce que** la couche fine électriquement conductrice (4 ; 4") est réalisée en alliage d'aluminium, ou en alliage de cuivre, ou en alliage d'argent.

12. Support de cuisson métallique revêtu (10 ; 10") selon l'une des revendications 1 à 11, **caractérisé en ce que** le revêtement de protection (5 ; 5") est un revêtement de type PTFE, ou un revêtement de type émail, ou un revêtement de type laque, ou un revêtement de type céramique, ou un revêtement de type sol-gel, ou un revêtement à base de résine silicone, ou un revêtement à base de résine silicone-polyester.

13. Support de cuisson métallique revêtu (10) selon l'une des revendications 1 à 12, **caractérisé en ce que** le revêtement antiadhésif (1) est un revêtement de type PTFE, ou un revêtement de type céramique, ou un revêtement de type sol-gel, ou un revêtement à base de résine silicone, ou un revêtement à base de résine silicone-polyester.

14. Article culinaire (140) comportant un support de cuisson métallique revêtu (100) et un organe de préhension (150) monté sur le support de cuisson métallique revêtu (100), **caractérisé en ce que** le support de cuisson métallique revêtu (100) est conforme à l'une des revendications 1 à 13.

15. Appareil électrique de cuisson (160) comportant un support de cuisson métallique revêtu (100) associé à un foyer de chauffe par induction (170), **caractérisé en ce que** le support de cuisson métallique revêtu (100) est conforme à l'une des revendications 1 à 14.
